(19) Europäisches Patentamt
European Patent Office
Office européen des brevets

(11) **EP 1 606 644 B1**

(12) **FASCICULE DE BREVET EUROPEEN**

(45) Date de publication et mention de la délivrance du brevet:
**03.12.2008 Bulletin 2008/49**

(21) Numéro de dépôt: **04742291.0**

(22) Date de dépôt: **19.03.2004**

(51) Int Cl.:
*G01S 3/786* (2006.01)     *G01C 21/02* (2006.01)

(86) Numéro de dépôt international:
**PCT/FR2004/000675**

(87) Numéro de publication internationale:
**WO 2004/086079 (07.10.2004 Gazette 2004/41)**

(54) **PROCEDE ET DISPOSITIF D'ATTRIBUTION DE COEFFICIENTS DE PONDERATION POUR DES CALCULS D'ATTITUDE AVEC UN CAPTEUR STELLAIRE**

VERFAHREN UND EINRICHTUNG ZUR ZUWEISUNG VON GEWICHTUNGSKOEFFIZIENTEN ZUR DURCHFÜHRUNG VON LAGEBERECHNUNGEN MIT EINEM STERNSENSOR

METHOD AND DEVICE FOR ASSIGNING WEIGHTING COEFFICIENTS FOR PERFORMING ATTITUDE CALCULATIONS WITH A STAR SENSOR

(84) Etats contractants désignés:
**AT BE BG CH CY CZ DE DK EE ES FI FR GB GR HU IE IT LI LU MC NL PL PT RO SE SI SK TR**

(30) Priorité: **20.03.2003 FR 0303407**

(43) Date de publication de la demande:
**21.12.2005 Bulletin 2005/51**

(73) Titulaire: **CENTRE NATIONAL D'ETUDES SPATIALES**
**75001 Paris (FR)**

(72) Inventeur: **POTTECK, Serge**
**F-31000 Toulouse (FR)**

(74) Mandataire: **Texier, Christian et al**
**Cabinet Régimbeau**
**20, rue de Chazelles**
**75847 Paris Cedex 17 (FR)**

(56) Documents cités:
**US-B1- 6 272 432**     **US-B1- 6 330 988**
**US-B1- 6 362 464**

- **LIEBE C C ET AL: "Active pixel sensor (APS) based star tracker" IEEE AEROSPACE CONFERENCE PROCEEDINGS, XX, XX, vol. 1, 21 mars 1998 (1998-03-21), pages 119-127, XP002092467**

EP 1 606 644 B1

## EP 1 606 644 B1

**Description**

DOMAINE TECHNIQUE GENERAL.

La présente invention concerne le domaine des procédés de détermination d'orientation d'objets dans l'espace.
Plus précisément, elle concerne un procédé d'attribution de coefficients de masses aux mesures d'une succession d'étoiles acquises par un capteur stellaire afin de déterminer une orientation dans l'espace.

ETAT DE L'ART.

De plus en plus de satellites artificiels sont en orbite autour de la Terre ou sont lancés dans l'espace. Il est bien entendu important de connaître la position dans l'espace des satellites, mais il faut connaître également leur attitude, c'est-à-dire leur orientation par rapport à un référentiel inertiel dans la voûte céleste.
Un capteur stellaire est un équipement qui fournit sa propre mesure d'attitude, calculée à partir des mesures de direction d'étoiles qu'il réalise, ou bien qui transmet directement la liste des mesures de directions élémentaires à un dispositif client, comme le logiciel central d'un satellite sur lequel le capteur est placé par exemple.

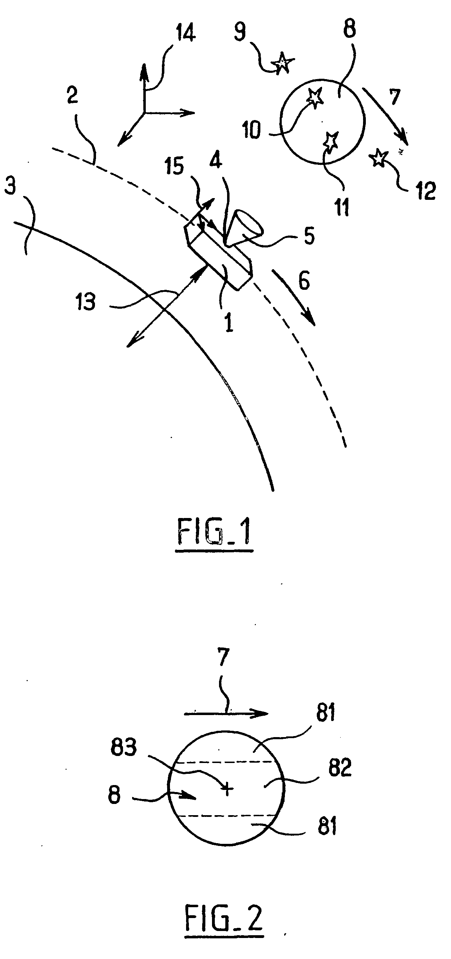

La figure 1 représente un satellite 1, par exemple sur une orbite 2 autour d'une planète, par exemple la Terre, à une altitude 13 de la surface de la planète. Le satellite 1 comporte sur l'une de ses parois un capteur stellaire 4 tourné vers les étoiles de la voûte céleste, et ayant un champ de vue schématisé par le tronc de cône 5. On a représenté par le cercle 8 la partie de la voûte céleste observable dans le champ de vue 5. Les étoiles 10 et 11 représentent schématiquement une partie des étoiles observables par le capteur 4. On comprend que plusieurs, voire grand nombre d'étoiles sont observables en même temps dans le cercle 8. Les étoiles 9 et 12 représentent les étoiles de la voûte céleste en dehors du champ de vue du capteur. Le satellite 1 se déplace sur l'orbite 2 selon la flèche 6. Par conséquent, on comprend que le cercle 8 se déplace également sur la voûte céleste selon la flèche 7. Ainsi, l'étoile 9 était dans le cercle 8 dans le passé, et l'étoile 12 sera dans le cercle 8 dans le futur du déplacement du satellite.
Le plus souvent, l'attitude du capteur 4 ou du satellite 1 est calculée en utilisant une partie seulement des étoiles présentes dans le champ de vue 8 du capteur 4 stellaire. On peut par exemple choisir une dizaine d'étoiles pour effectuer un calcul d'attitude. Dans le calcul de l'attitude, on mesure la direction de l'étoile 10 ou 11 par rapport à un repère 15 lié au capteur 4.
Connaissant par ailleurs la direction de l'étoile 10 ou 11 par rapport à un repère inertiel connu 14, on peut en déduire la direction du repère 15 - et donc du satellite 1 ou du capteur 4 par rapport au repère 14 de la voûte céleste
US-B-6 362 464 divulgue une technique pour sélectionner des étoiles par un capteur stellaire afin de minimiser l'erreur de pointage. US-B-6 330 988 divulgue une technique d'égalisation d'un catalogue d'étoiles pour améliorer la détermination de l'attitude. Le document XP002092467 divulgue un capteur stellaire utilisant un capteur à pixels actifs. US-B-6 272 432 divulgue quant à lui une technique d'estimation d'attitude par comparaison d'une estimation de l'attitude d'un satellite grâce à trois axes inertiels avec une estimation de l'attitude du satellite avec les étoiles.
Le choix des étoiles à mesurer pour le calcul de la direction est déterminant vis-à-vis de la précision de l'estimation d'attitude
le choix des étoiles est important également quand les mesures de directions d'étoiles sont transmisses directement et exploitées par le dispositif client du capteur stellaire.
Dans certains cas, les étoiles ne sont pas soit rejetées soit sélectionnées, mais une masse leur est associée, qui pondère l'importance à leur donner dans les traitements ultérieurs.
Dans d'autres cas encore, le capteur stellaire effectue lui-même une première sélection d'étoiles, réalise des mesures sur ces étoiles sélectionnées et les transmet éventuellement accompagnées d'un poids ou transformées en une estimation d'attitude globale.
Les mesures peuvent aussi avoir pour origine différents capteurs stellaires embarqués à bord du même satellite.
Dans tous les cas, une sélection est un ensemble de mesures, potentielles ou déjà réalisées, de direction d'étoiles, mesures dont la date de validité est identique. Comme on l'a dit, des masses sont éventuellement associées à chaque mesure. Au fil du temps, un capteur stellaire 4 génère une succession de sélections, tout ou partie des étoiles sélectionnées faisant l'objet de mesures.
Traditionnellement, on sélectionne le plus longtemps possible les étoiles choisies comme étant les meilleures. En effet, aux origines de la visée stellaire, il était déjà difficile d'accrocher une étoile. On ne la lâchait donc plus quand on la tenait.
Un des critères de choix des étoiles d'une sélection est notamment la magnitude de chaque étoile observable dans le champ de vue. On choisit ainsi les étoiles les plus brillantes, à savoir celles qui ont la magnitude la plus faible. Un des autres critères de choix est la distance de l'étoile à l'axe optique du champ de vue. On montre sur la figure 2 plus précisément le cercle 8 en déplacement selon la flèche 7 sur la voûte céleste. Choisir dans le cercle 8 des étoiles éloignées du centre optique 83 et situées dans une zone référencée par 81 permet d'améliorer la précision de l'estimation selon l'axe optique 83 du senseur. En effet, l'axe 83 est le plus sujet aux erreurs de mesure. Les étoiles situées dans une zone référencée par 82 seront, à un moment ou à un autre, proches de l'axe optique 83 et provoqueront des erreurs de mesure. On rejette l'étoile trop proche du centre optique 83 et on sélectionne alors une autre étoile plus éloignée du centre optique 83.

Les procédés de sélection donnent actuellement une importance prépondérante à ces deux critères, qui conduisent à ne pas changer souvent d'étoiles.

Les procédés précédents présentent cependant des inconvénients.

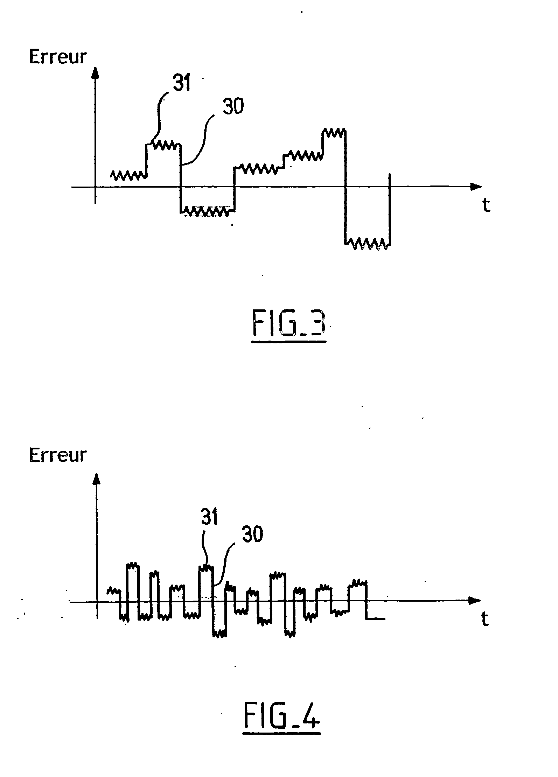

En effet, certaines étoiles, dont la direction est particulièrement mal estimée par le capteur 4, perturbent l'estimation d'attitude globale pendant toute la durée où elles sont sélectionnées. Cette durée peut être assez longue quand l'attitude du capteur stellaire 4 évolue peu et quand son champ de vue 5 est plutôt large. La figure 3 représente schématiquement une telle situation. On a tracé sur la figure 3 l'erreur sur l'attitude du capteur 4 en fonction du temps. Les changements 30 de niveau d'erreur du graphe sont dus à des changements de sélection d'étoiles pour la détermination de l'attitude. On constate que les erreurs dues au choix d'une sélection sont relativement longues par rapport aux oscillations 31 sur chaque plateau de la courbe, qui sont quant à elles dues aux erreurs d'observation de chaque étoile de la sélection. On constate que les erreurs 31 s'annulent du fait de leur moyennage sur un temps relativement court par rapport au temps sur lequel est observée chaque sélection..Autrement dit, le bruit dû aux oscillations 31 est facilement filtrable par les techniques actuelles de traitement des données reçues des capteurs stellaires par les dispositifs clients, car il est situé dans les hautes fréquences du spectre fréquentiel du signal acquis par le capteur. Le fait de changer peu souvent de sélection provoque au contraire un bruit à faible fréquence, difficilement filtrable.

Plus généralement, les procédés d'attribution de coefficient de pondération selon l'art antérieur ne permettent pas de contrôler la dispersion temporelle du bruit dû à chaque sélection.

De plus, certains phénomènes - par exemple la distorsion - varient selon la position des étoiles de chaque sélection dans le champ de vue.

Plus généralement, les procédés d'attribution de coefficients de pondération selon l'art antérieur ne permettent pas de contrôler ces phénomènes de dispersion spatio-temporelle des étoiles auxquelles sont attribuées de masses importantes.

PRESENTATION DE L'INVENTION.

L'invention propose de pallier ces inconvénients.

Un des buts de l'invention est de proposer un procédé d'attribution de coefficients de pondération ou de masse pour un calcul d'une orientation dans l'espace permettant de maîtriser les erreurs de mesure d'un capteur stellaire.

Un des autres buts de l'invention est de disperser plus ou moins les étoiles dont les mesures de direction sont exploitées, soit par le capteur stellaire lui-même, soit par le dispositif client du capteur stellaire.

Un autre but de l'invention est de proposer un procédé permettant une dispersion spatio-temporelle des sélections d'étoiles.

Enfin, un autre but de l'invention est de proposer un procédé qui puisse prendre en considération les sélections passées afin d'étaler plus ou moins, sur tout le spectre, le bruit basse fréquence lié aux sélections d'étoiles.

A cet effet, l'invention propose un procédé d'attribution de coefficients de masses aux mesures d'une succession d'étoiles acquises par un capteur stellaire relié à un dispositif client afin de déterminer une orientation dans l'espace, caractérisé en ce qu'on favorise ou défavorise le renouvellement dans le temps, par le capteur stellaire et/ou son dispositif client, de la position des mesures ayant les masses les plus importantes et/ou des étoiles sur lesquelles portent ces mesures, afin de déplacer dans le spectre fréquentiel une partie de la puissance de l'erreur associée à l'ensemble des mesures stellaires.

L'invention est avantageusement complétée par les caractéristiques suivantes, prises seules ou en une quelconque de leur combinaison techniquement possible :

- dans le calcul des masses des mesures d'une sélection courante, le renforcement ou l'atténuation intervient par le biais d'un poids de distance associé à chaque mesure de la sélection courante et caractéristique d'une distance moyenne entre ladite mesure d'une part et les mesures des sélections passées et les autres mesures de la sélection courante d'autre part ;
- on calcule le poids de distance associé à une mesure de la sélection courante comme une moyenne pondérée des distances respectives entre ladite mesure d'une part, et respectivement les mesures des sélections passées et les autres mesures de la sélection courante d'autre part ;
- dans le coefficient de pondération associé à la distance entre une première mesure de la sélection courante et une seconde mesure d'une sélection passée ou d'une autre mesure de la sélection courante, interviennent un coefficient de mémoire associé à ladite seconde mesure, et/ou le poids de la seconde mesure si elle appartient à une sélection passée ou un poids provisoire si elle appartient à la sélection courante ;

- le calcul de la distance combine la distance angulaire entre les deux mesures, et une distance identitaire fonction de la différence de nature des deux étoiles qui font l'objet des mesures ;
- on définit le coefficient de mémoire d'une mesure $m_i$ à un instant $t$ par la formule :

$$Mem(m_i/t) = \mu \times \Pi^{-[t-T(m_i)]}, \text{ où}$$

où

- $T(m_k)$ est une date de validité d'une mesure $m_k$.
- $\mu$ et $\Pi$ sont des constantes.

- on affecte à chaque étoile qui est l'objet d'une mesure une charge résumant les masses attribuées aux mesures ayant porté sur ladite étoile par le passé, atténuées par le passage du temps ;
- on définit la charge de l'étoile $e_p$ à un instant T par la formule :

$$Cha(e_p, T) = \sum_{\substack{i=P+1 \\ E(m_i)=e_p}}^{N} \left[ A(m_i) \times Mem(m_i/T) \right]$$

où $Mem(m_i/T)$ est le coefficient de mémoire de la mesure $m_i$ à l'instant T, $E(m_i)$ est l'étoile sur laquelle portait la mesure $m_i$ et $A(m_i)$ est la masse de la mesure $m_i$.
- avant de la faire intervenir dans le calcul de la masse associée à une mesure, on actualise la charge associée à une étoile sur laquelle porte une mesure de la sélection courante, grâce à un coefficient qui dépend de la différence $\Delta$ entre la date courante et la date de la dernière actualisation de la même charge ;
- que le coefficient est multiplicatif et se présente sous la forme $\Pi^{-\Delta}$, où $\Pi$ est une constante ;
- le coefficient est additif et se présente sous la forme $-_{\rho \times \Delta}$, où $_\rho$ est une constante ;
- après avoir calculé la masse associée à une mesure de la sélection courante, on met à jour la charge associée à l'étoile ayant fait l'objet de cette mesure ;
- la mise à jour est effectuée en additionnant la masse associée à la mesure ;
- on fait intervenir une fonction aléatoire dans le calcul des masses ;
- on effectue une itération du calcul du poids de distance avec une masse provisoire pour les mesures de la sélection courante, le poids de distance permettant de calculer une nouvelle masse qui permet elle-même de calculer un nouveau poids de distance, et ainsi de suite jusqu'à convergence vers une masse finale ;
- on enregistre les valeurs numériques du procédé dans des moyens mémoire et de traitement du capteur et/ou du dispositif client ;
- on augmente le renouvellement des étoiles ayant un poids important en élevant la fréquence des mesures du capteur stellaire et/ou du dispositif client ;
- on fait intervenir directement dans les masses la dispersion de l'ensemble d'une nouvelle sélection grâce à des moyens de traitement reliés au capteur et/ou au dispositif client ;
- pour faire intervenir directement la dispersion dans les masses, on utilise des moyens de traitement reliés au capteur et/ou au dispositif client comportant une structure neuronale.

L'invention concerne également le dispositif de mise en oeuvre du procédé.

PRESENTATION DES FIGURES

D'autres caractéristiques, buts et avantages de l'invention ressortiront de la description qui suit, qui est purement illustrative et non limitative, et qui doit être lue en regard des dessins annexés sur lesquels :

- la figure 1, déjà commentée, représente schématiquement un satellite artificiel en orbite autour d'une planète et comportant un capteur stellaire ;
- la figure 2, déjà commentée, représente schématiquement un champ de vue d'un capteur stellaire sur la voûte céleste ;
- la figure 3, déjà commentée, représente schématiquement un graphe de l'erreur sur l'attitude en fonction du temps dans des procédés d'attribution de coefficients de pondération selon l'état de la technique ;
- la figure 4 représente schématiquement un graphe de l'erreur sur l'attitude en fonction du temps dans un procédé d'attribution de coefficients de pondération selon l'invention.

DESCRIPTION DETAILLEE.

Dans certaines de ses phases de calcul, un capteur 4 stellaire visible sur la figure 1 choisit de sélectionner telle ou telle des étoiles (10 et 11 sur la figure 1) qu'il détecte dans son champ de vue 8, soit pour l'utiliser lui-même dans le calcul de l'attitude, soit pour transmettre directement la mesure de sa direction au dispositif client, le satellite 1 par exemple.

La sélection passe alors par l'attribution d'une masse à chaque étoile 10 et 11, qui caractérise le potentiel de l'étoile vis-à-vis des besoins du dispositif client 1 du capteur stellaire 4.

Selon d'autres procédés, les étoiles interviennent dans le calcul de l'attitude avec une pondération, ou bien une masse est transmise au dispositif client 1 avec la mesure de direction d'étoile. Toutes les étoiles sont alors éventuellement transmises, une étoile transmise avec une masse nulle étant équivalente à une étoile non sélectionnée.

Dans chaque cas, une masse est associée, à un moment ou un autre, à une mesure de direction d'étoile. Cette masse caractérise le potentiel de la mesure vis-à-vis des besoins du dispositif client 1 du capteur stellaire 4.

On va décrire un premier procédé possible d'attribution de coefficients de masses aux mesures d'une succession d'étoiles acquises par un capteur stellaire afin de déterminer une orientation dans l'espace. Selon ce premier procédé, les masses sont attribuées individuellement aux mesures.

Selon un premier procédé, on contrôle l'importance accordée aux mesures selon qu'elles portent sur de nouvelles étoiles ou non, ce qui peut être appelé la dispersion temporelle des mesures d'étoiles. Elle prend en considération les sélections passées. On amplifie l'effet de dispersion des mesures.

Selon un premier mode de mise en oeuvre possible, lors de l'observation des étoiles, on réduit la durée consécutive pendant laquelle une même étoile est sélectionnée. On a représenté schématiquement les effets d'une telle situation sur la figure 4. Ainsi, on a tracé sur la figure 4 l'erreur sur l'attitude du capteur 4 de la figure 1 en fonction du temps. Comme sur la figure 3, les changements 30 de niveau d'erreur du graphe sont dus à des changements de sélections d'étoiles pour la détermination de l'attitude. On constate que les erreurs dues au choix d'une sélection sont relativement plus courtes que ceux de la figure 3. Elles sont désormais de l'ordre de grandeur des erreurs 31 dues aux erreurs d'observation de chaque étoile de la sélection. Du point de vue spectral, une fréquence plus rapide de changement de sélection d'étoiles revient à échanger du bruit à basse fréquence (induit par des étoiles bruitées par les oscillations 31 et conservées longtemps) par du bruit à plus haute fréquence (induit par un changement plus fréquent des étoiles qui interviennent dans l'estimation d'attitude). Plus précisément, cela revient à étaler la puissance à très basse fréquence dans une gamme de fréquences plus large. Dans le cas où le dispositif client du capteur stellaire a des capacités de mesure à haute fréquence (ce qui est le cas quand il met en oeuvre des gyroscopes performants), cette opération peut être particulièrement intéressante. On peut en effet facilement filtrer le bruit.

On comprend que réciproquement, si les capacités de filtrage haute fréquence du dispositif client sont faibles, et si le bruit haute fréquence est gênant, il peut être intéressant de favoriser les basses fréquences en conservant chaque étoile plus longtemps. On aura donc un mode de mise en oeuvre du procédé contrôlant la dispersion temporelle des mesures qui sera différent.

Selon un autre procédé possible selon l'invention, on contrôle la dispersion spatiale des mesures d'étoiles.

Selon un premier mode de mise en oeuvre possible, lors de l'observation des étoiles, on disperse les étoiles sélectionnées, géométriquement dans le champ de vue. On contrôle ainsi la distorsion des mesures. Cette dispersion concerne une sélection réalisée à un instant donné.

On comprend également que selon un autre mode de mise en oeuvre, on souhaite ne pas disperser spatialement les mesures.

On combine la dispersion spatio-temporelle des mesures pour contrôler l'erreur due à chaque sélection dans le calcul de l'orientation.

A cet effet, l'invention fait intervenir, dans le calcul de la masse associée à une mesure, la distance moyenne de la mesure correspondante avec les mesures des sélections passées et présente. Si l'on désire que les mesures auxquelles a été accordée une forte masse perdurent longtemps, on cherchera à minimiser cette distance moyenne. Si l'on désire au contraire que les mesures se renouvellent souvent on cherchera à maximiser la distance.

DEFINITIONS.

On définit par " poids de distance " une distance moyenne d'une mesure avec les mesures des sélections passées et présente. Le poids de distance interviendra ensuite dans le calcul de la masse, lequel fait intervenir d'autres considérations (par exemple la position de la mesure sur le champ de vue, ou la magnitude de l'étoile considérée). Une expression possible du poids de distance est donnée dans la suite de la présente description. On définit d'abord un certain nombre de ses variables possibles.

Soit {m₁,m₂, .. m_N} la suite des mesures de directions d'étoiles passées et présentes. Deux éléments distincts de cette suite peuvent correspondre à la même étoile physique, mesurée à deux instants différents.

La sous-suite {m₁,m₂,.. m_P}, avec P≤N, est la suite des étoiles de la sélection présente.

$\delta(m_i,m_j)$ caractérise l'écart entre les mesures m_i et m_j, et fait intervenir deux termes de natures très différentes, par exemple par leur produit :

○ DA(m_i,m_j) - Il s'agit de l'écart angulaire dans le repère du capteur 4 stellaire (ou tout autre distance qui s'y ramène, par exemple la distance géométrique sur la matrice de détection de ce même capteur). Caractériser cet écart angulaire permet de disperser ou de regrouper, sur la matrice du capteur, les mesures auxquelles sera attribuée une forte masse. Cela peut permettre de s'affranchir, par exemple, d'une partie des erreurs de distorsion optique.

• DE(m_i,m_j) - Il s'agit de l'écart identitaire, c'est-à-dire de la différence de caractéristique des étoiles qui sont l'objet des deux mesures. Par exemple, cet écart peut être égal à 0 si les deux étoiles sont identiques, et à une valeur positive sinon (compte tenu du mouvement du capteur stellaire selon la direction 6 de la figure 1, deux mesures correspondant à des étoiles identiques peuvent être éloignées au sens de la distance DA). Caractériser cette distance permet de remplacer plus ou moins souvent les étoiles qui font l'objet des mesures. Cela permet aussi de favoriser des étoiles qui ont des spectres ou des magnitudes différentes (ou semblables) aux étoiles précédemment sélectionnées.

Une possibilité consiste à utiliser l'écart identitaire pour caractériser l'écart entre la mesure courante et les mesures des sélections passées, et l'écart angulaire pour caractériser les écarts entre les mesures de la sélection présente.

Éventuellement, la distance peut être une fonction de l'une ou des deux distances précédentes. Si la fonction est décroissante à la fois en fonction de DA et de DE, on calculera, au lieu d'un poids de distance, un poids de proximité. C'est lui qu'on pourra faire intervenir dans la formule de calcul de la masse au lieu ou en plus du poids de distance.

Par exemple, on choisira $\delta(m_i,m_j) = qx(e^{DA(mj,mi)}-1)xDE(m_j,m_i)$, où q est une constante, DA(m_i,m_j) est la distance angulaire entre les deux mesures, et DE(m_i,m_j) vaut 0 si les étoiles ayant fait l'objet des deux mesures sont identiques, et 1 sinon. $\delta(m_i,m_j)$ est donc non nul seulement si les étoiles sont différentes.

À chaque mesure m_i des sélections passées est associé sa masse A(m_i) calculée précédemment, qui fait notamment intervenir le poids de distance.

Dans le calcul du poids de distance correspondant à une mesure m_j de la sélection courante, la masse des mesures passées est diminuée par le fait que le temps a effacé la mémoire que l'on garde de cette mesure. Le résultat de cette diminution est la masse rémanente.

La masse rémanente peut être calculée comme le produit de la masse et d'un coefficient de mémoire *Mem* $(m_i/t)$ qui caractérise la mémoire que l'on garde, de la mesure m_i à la date t. À la date T(m_j) de la mesure m_j, le coefficient de mémoire de la mesure m_i s'écrit *Mem(m_i/T(m_j))*.

Le coefficient de mémoire *Mem(m_i/t)* décroît quand la mesure m_i s'éloigne dans le passé. Cela traduit l'effacement progressif de la mémoire des mesures stellaires.

On retiendra par exemple le produit suivant :

$$Mem(m_i/t) = \mu \times \Pi^{-[t-T(m_i)]} \; ;$$

où

- T(m_k) est la date de validité de la mesure m_k.
- $\mu$ et $\Pi$ sont des constantes.

Les valeurs des constantes peuvent dépendre de l'écart $\delta(m_i,m_j)$. Ainsi, en faisant varier $\mu$, le coefficient de mémoire peut passer à la valeur 0 quand $[t-T(m_i)]$ dépasse une certaine valeur. Cela efface la mémoire de la mesure. Le coefficient peut aussi passer à la valeur 0 quand $[t-T(m_i)]$ est inférieur à une certaine valeur. Cela permet de forcer la sélection d'étoiles présentes dans les sélections très récentes. Cela permet aussi d'exclure de la formule du poids de distance les mesures de la sélection courante.

CALCUL DU POIDS DE DISTANCE.

Le poids de distance associé à la mesure $m_j$ est une moyenne, sur l'ensemble des mesures des sélections passées et des mesures de la sélection courante (sauf $m_j$).

La moyenne peut être pondérée par les masses rémanentes des mesures qui interviennent dans la moyenne.

La moyenne sera calculée par exemple sous la forme :

$$P(m_j) = \left[ \frac{\sum\limits_{\substack{i=1 \\ i \neq j}}^{N} \left[ A(m_i) \times Mem(m_i / T(m_j)) \right]^{\Omega} \times \delta(m_j, m_i)^{\varphi}}{\sum\limits_{\substack{i=1 \\ i \neq j}}^{N} \left[ A(m_i) \times Mem(m_i / T(m_j)) \right]^{\Omega}} \right]^{1/\varphi} ;$$

où

$\Omega$ et $\varphi$ sont des constantes. Si $\Omega$ et $\varphi$ valent 1 il s'agit d'une moyenne linéaire des distances. Si $\varphi$ vaut 2 il s'agit d'une moyenne quadratique de ces mêmes distances ($\Omega$ vaudra en principe 1). Si $\varphi < 1$, on accentue l'éloignement qui concerne les paires de mesures très proches.

Si la mesure $m_j$ fait partie de la sélection présente, la masse $A(m_j)$ ne fait pas intervenir le poids de distance.

Dans la pratique, la masse d'une mesure de la sélection courante peut être calculée à partir d'un poids de distance arbitraire. Suite à ce premier calcul, une méthode itérative peut être mise en oeuvre : à chaque fois intervient, dans le calcul des poids de distance des mesures de la sélection courante, les masses respectivement associées à ces mesures, et qui prennent en compte le poids de distance calculé à l'itération précédente. Tous les poids de distance des mesures de la sélection courante sont ainsi recalculés jusqu'à leur convergence.

Une autre possibilité consiste, dans le calcul des poids de distance de la sélection courante, à ne pas faire intervenir les autres mesures de la sélection courante. Cela revient à choisir $Mem(m_i/t)=0$ pour toutes les valeurs de i telles que $m_i$ soit une mesure de la sélection courante.

Le calcul du poids de distance permet d'obtenir une masse pour chaque mesure d'étoile.

Par exemple, on calculera la masse comme $A(m_j)=e^{-M} \times \psi(m_j) \times P(m_j)$, où

M est la magnitude de l'étoile qui fait l'objet de la mesure $m_j$, $\psi(m_j)$ la distance angulaire entre la mesure $m_j$ et le l'axe optique du capteur stellaire, et $P(m_j)$ le poids de distance associé à la mesure $m_j$.

On favorise ainsi dans une sélection les étoiles ayant les masses les plus importantes.

On comprend alors que l'on contrôle la dispersion spatio-temporelle des sélections en jouant sur les différentes variables du poids de distances, qui donne une masse finale différente aux mesures. On change plus ou moins vite les sélections, et les sélections sont plus ou moins dispersées entre elles sur la matrice du capteur, en fonction des paramètres des variables que l'on choisit.

On va maintenant décrire une variante du procédé selon lequel, pour limiter l'information à mémoriser et pour simplifier les calculs, le poids de distance des mesures des sélections passées est calculé récursivement.

Pour cette variante du procédé, on utilise la distance identitaire pour définir la proximité entre les mesures.

**DEFINITIONS.**

Selon la variante du procédé, l'information qui résume le passé caractérise non pas directement les mesures elles-mêmes, mais les étoiles sur lesquelles ont porté les mesures des sélections passées. Cette information se résume à un couple Cp associé à chaque étoile $e_p$ dont la mesure a fait partie d'une sélection passée défini par :
$C_p=\{Cha, date\}$, où
date est la date de validité de la charge Cha, laquelle évolue dans le temps.

La charge Cha est le cumul, à l'instant considéré, des masses rémanentes associés à l'ensemble des mesures qui, dans les sélections passées, ont porté sur l'étoile $e_p$. La charge associée à l'étoile $e_p$ à un instant T se définit donc théoriquement, selon les notations définies plus haut et si $E(m_i)$ est l'étoile sur laquelle portait la mesure $m_i$, par :

$$Cha(e_p,T) = \sum_{\substack{i=P+1 \\ E(m_i)=e_p}}^{N}\left[A(m_i)\, x\, Mem(m_i/T)\right]$$

Pour prendre en considération la dispersion spatiale entre les sélections successives (la zone visée dans le ciel pouvant évoluer sous l'effet du mouvement du satellite), on peut multiplier le terme à l'intérieur de la somme par une fonction de la distance angulaire entre la mesure courante portant sur l'étoile $e_p$, et la mesure $m_i$. Cette fonction prendra par exemple la forme :

$e^{-\eta x d(m(e_p),m_i)}$

où $m(e_p)$ est la mesure de la sélection courante portant sur l'étoile p, d la distance entre les deux mesures en argument, et $\eta$ un coefficient.

A la place d'une charge, on peut calculer un souvenir associé à l'étoile, moyenne des coefficients de mémoire associés aux mesures ayant porté sur l'étoile considérée, pondérés par leurs masses, par exemple :

$$SOU(e_p,T) = \frac{\displaystyle\sum_{\substack{i=1 \\ E(m_i)=e_p}}^{N}\left[A(m_i)\, x\, Mem(m_i/T)\right]}{\displaystyle\sum_{\substack{i=1 \\ E(m_i)=e_p}}^{N}A(m_i)}$$

Ce souvenir est une « charge normalisée » qu'on fera intervenir dans le calcul de la masse.

PROPAGATION DES CHARGES.

Au moment du traitement des mesures de la sélection courante, on propage les charges de la façon suivante.

On effectue un rafraîchissement des charges et une mise à jour des dates associées. Les charges associées aux étoiles qui font partie des sélections passées sont diminuées pour traduire l'effacement de la mémoire. Eventuellement, cette mise à jour peut concerner seulement les étoiles de la sélection courante, mais les informations concernant les autres étoiles doivent toutes être conservées. Les charges associées aux étoiles ne faisant partie d'aucune sélection passée restent nulles. Les dates associées aux charges des étoiles des sélections passées sont passées à la date de la sélection courante.

Cette diminution de la charge peut s'effectuer, si $\Delta$ est l'écart temporel défini comme suit :

$$\Delta = \text{date de la sélection courante - date précédemment associée à la charge,}$$

*charge*,
par l'un des deux procédés suivants :

   1. multiplication de la charge précédente par un facteur :

   $\Pi^{-\Delta}$ , où $\Pi$ est une constante

   2. addition à la charge précédente d'un facteur :

   -   $\rho x \Delta$ , où $\rho$ est une constante.

La charge ainsi obtenue est forcée à 0 si le résultat de l'opération précédente est négatif.

La charge est calculée sans approximation, quand à la fois on a choisi le premier procédé et que le coefficient de mémoire se présente sous forme exponentielle. Dans les autres cas, le calcul est approché.

Ensuite, on attribue des poids de distance. On attribue comme poids de distance à chaque mesure de la sélection courante, la charge rafraîchie associée à l'étoile qui fait l'objet de la mesure considérée. Si l'étoile n'avait fait l'objet d'aucune mesure précédente, sa charge de départ est nulle et son poids de distance le devient donc aussi.

On calcule ensuite les masses. Les poids de distance calculés lors de l'étape précédente permettent le calcul des masses associées aux mesures de la sélection courante, par exemple grâce à la formule

$$A(m_j) = e^{-M} \times \psi(m_j) \times P(m_j).$$

On actualise ensuite les charges. Les charges des étoiles sur lesquelles portent les mesures de la sélection courante sont augmentées de la valeur des masses respectives des mesures. Pour chaque étoile $e_h$ qui n'était pas précédemment caractérisée par un couple $C_h$={Cha,date}, la date est fixée à la date de la sélection courante. Pour toutes les étoiles concernées, l'affectation de la date peut être réalisée à cette étape plutôt qu'à l'étape rafraîchissement des charges.

Enfin, on annule les charges trop faibles. Cette étape est optionnelle. Les charges qui sont inférieures à une valeur plancher peuvent être annulées, ce qui revient à oublier que l'étoile a fait l'objet d'au moins une sélection par le passé.

Dans le calcul des masses, on peut également faire intervenir une fonction aléatoire, par exemple une variable aléatoire gaussienne ou uniforme. Cela contribue à disperser spatio-temporellement les étoiles, sous l'effet du hasard cette fois.

MISE EN OEUVRE DU PROCEDE.

Le calcul du poids de distance ou du couple de charge suppose de mémoriser des informations relatives aux mesures des sélections antérieures, choisies par exemple, pour chaque mesure, parmi :

- La date de la mesure,
- La masse finalement attribuée à la mesure,
- La direction de la mesure, repérée angulairement dans un repère 15 lié au capteur 4 ou vectoriellement dans un repère lié à sa matrice,
- Certaines caractéristiques de l'étoile qui a donné lieu à la mesure.

Dans le cas de l'utilisation du procédé récursif, on garde le couple $C_p$={Cha,date} pour chaque étoile ayant fait l'objet d'en ensemble de mesures dont la mémoire n'est pas effacée.

Des moyens mémoire et de traitement sont donc associés au capteur et/ou à son dispositif client, à savoir le satellite.

Dans le cas où la limite de la mémoire disponible est atteinte, on peut supprimer les informations concernant les mesures dont la mémoire est la plus faible. Le critère pourra porter sur :

- le produit de la mémoire associée à la mesure par la masse de cette même mesure.

- la charge, en particulier en cas d'utilisation du procédé récursif.

On va décrire un deuxième procédé possible d'attribution de coefficients de masses aux mesures d'une succession d'étoiles acquises par un capteur stellaire afin de déterminer une orientation dans l'espace. Selon ce deuxième procédé, on choisit directement la meilleure sélection d'étoiles pour la détermination de l'orientation dans l'espace. On ne considère plus les étoiles individuellement pour déterminer celles qui ont les plus gros coefficients, avant des les regrouper dans des sélections. On fait intervenir directement dans les masses la dispersion de l'ensemble d'une nouvelle sélection grâce à des moyens de traitement reliés au capteur. Selon ce procédé, les moyens de traitement reliés au capteur peuvent comporter une structure neuronale. La structure neuronale permet d'attribuer des masses aux étoiles pour la détermination de l'orientation du capteur ou du satellite, après un processus d'apprentissage par exemple. Le critère d'apprentissage du réseau neuronal peut faire intervenir les coefficients de distances, distances moyennes, charges et/ou souvenir définis précédemment. Il peut aussi faire intervenir la moyenne, sur les étoiles d'une sélection, des poids de distance éventuellement pondérés par les masses des étoiles (ou par les masses provisoires qui ne tiennent pas compte des poids de distance).

Dans les deux procédés, le phénomène de dispersion des étoiles sélectionnées peut être amplifié en forçant le capteur stellaire à travailler à une fréquence plus élevée que la fréquence strictement utile. En effet, moyennant la mise en oeuvre des procédés précédents le nombre de sélections utilisées sera augmenté, d'où un étalement supplémentaire du bruit sur le spectre. Les avantages ainsi obtenus sont de nature à compenser, du point de vue du dispositif client du capteur stellaire, l'augmentation de bruit induit par le raccourcissement de l'intégration d'information lumineuse par le capteur stellaire.

Avant utilisation, les mesures stellaires peuvent alors être filtrées puis sous-échantillonnées, pour revenir à la fréquence souhaitée. Le filtrage passe en principe par le calcul du quaternion d'attitude. La méthode est efficace même si l'on n'utilise pas, dans le critère, les poids du passé et de proximité.

Les développements qui précèdent s'appliquent aussi bien d'une part à un ensemble d'étoiles détecté et sélectionné régulièrement (par exemple une fois par seconde), au même moment - comme c'est le cas pour un fonctionnement classique du capteur stellaire à détecteur CCD -, ou d'autre part à ensemble d'étoiles où les étoiles sont détectées irrégulièrement (utilisation de nouveaux types de détecteurs) et où les sélections sont produites irrégulièrement, comme c'est le cas des capteurs stellaires à APS (Active Pixel Sensor).

Les procédés peuvent être mis en oeuvre à plusieurs niveaux, éventuellement simultanément, par exemple : le niveau de la sélection des étoiles sur lesquelles le ou les capteurs stellaires vont faire porter leurs mesures ; la pondération des mesures effectuées au niveau du ou des capteurs stellaires ; la pondération des mesures effectuées au niveau du dispositif client des mesures.

## Revendications

1. Procédé d'attribution de coefficients de masses aux mesures d'une succession d'étoiles acquises par un capteur stellaire (4) relié à un dispositif (1) client afin de déterminer une orientation dans l'espace, **caractérisé en ce qu'**on favorise ou défavorise le renouvellement dans le temps, par le capteur (4) stellaire et/ou son dispositif (1) client, de la position des mesures ayant les masses les plus importantes et/ou des étoiles sur lesquelles portent ces mesures, afin de déplacer dans le spectre fréquentiel une partie de la puissance de l'erreur associée à l'ensemble des mesures stellaires.

2. Procédé selon la revendication 1, **caractérisé en ce que,** dans le calcul des masses des mesures d'une sélection courante, le renforcement ou l'atténuation intervient par le biais d'un poids de distance associé à chaque mesure de la sélection courante et caractéristique d'une distance moyenne entre ladite mesure d'une part et les mesures des sélections passées et les autres mesures de la sélection courante d'autre part.

3. Procédé selon la revendication 2, **caractérisé en ce qu'**on calcule le poids de distance associé à une mesure de la sélection courante comme une moyenne pondérée des distances respectives entre ladite mesure d'une part, et respectivement les mesures des sélections passées et les autres mesures de la sélection courante d'autre part.

4. Procédé selon la revendication 3, **caractérisé en ce que,** dans le coefficient de pondération associé à la distance entre une première mesure de la sélection courante et une seconde mesure d'une sélection passée ou d'une autre mesure de la sélection courante, interviennent un coefficient de mémoire associé à ladite seconde mesure, et/ou le poids de la seconde mesure si elle appartient à une sélection passée ou un poids provisoire si elle appartient à la sélection courante.

5. Procédé selon l'une des revendications 3 ou 4, **caractérisé en ce que** le calcul de la distance combine la distance angulaire entre les deux mesures, et une distance identitaire fonction de la différence de nature des deux étoiles qui font l'objet des mesures.

6. Procédé selon l'une des revendications 4 ou 5, **caractérisé en ce qu'**on définit le coefficient de mémoire d'une mesure $m_i$ à un instant t par la formule :

$$Mem(m_i / t) = \mu \times \Pi^{-[t - T(m_i)]},$$

où

- $T(m_k)$ est une date de validité d'une mesure $m_k$.
- $\mu$ et $\Pi$ sont des constantes.

7. Procédé selon l'une des revendications 2 à 6, **caractérisé en ce qu'**on affecte à chaque étoile qui est l'objet d'une mesure une charge résumant les masses attribuées aux mesures ayant porté sur ladite étoile par le passé, atténuées par le passage du temps.

**8.** Selon la revendication 7, **caractérisé en ce qu'**on définit la charge de l'étoile $e_p$ à un instant T par la formule :

$$Cha(e_p, T) = \sum_{\substack{i=P+1 \\ E(m_i)=e_p}}^{N} \left[ A(m_i) \, x \, Mem(m_i/T) \right]$$

où $Mem(m_i/T)$ est le coefficient de mémoire de la mesure $m_i$ à l'instant T, $E(m_i)$ est l'étoile sur laquelle portait la mesure $m_i$ et $A(m_i)$ est la masse de la mesure $m_i$.

**9.** Procédé selon l'une des revendications 7 ou 8, **caractérisé en ce que,** avant de la faire intervenir dans le calcul de la masse associée à une mesure, on actualise la charge associée à une étoile sur laquelle porte une mesure de la sélection courante, grâce à un coefficient qui dépend de la différence $\Delta$ entre la date courante et la date de la dernière actualisation de la même charge.

**10.** Procédé selon la revendication 9, **caractérisé en ce que** le coefficient est multiplicatif et se présente sous la forme $\Pi^{-\Delta}$, où $\Pi$ est une constante.

**11.** Procédé selon la revendication 9, **caractérisé en ce que** le coefficient est additif et se présente sous la forme - $_{\rho x \Delta}$ , où $_\rho$ est une constante.

**12.** Procédé selon l'une des revendications 7 à 11, **caractérisé en ce que,** après avoir calculé la masse associée à une mesure de la sélection courante, on met à jour la charge associée à l'étoile ayant fait l'objet de cette mesure.

**13.** Procédé selon la revendication 12, **caractérisé en ce que** la mise à jour est effectuée en additionnant la masse associée à la mesure.

**14.** Procédé selon l'une des revendications 1 à 13, **caractérisé en ce qu'**on fait intervenir une fonction aléatoire dans le calcul des masses.

**15.** Procédé selon l'une des revendications 1 à 14, **caractérisé en ce qu'**on effectue une itération du calcul du poids de distance avec une masse provisoire pour les mesures de la sélection courante, le poids de distance permettant de calculer une nouvelle masse qui permet elle-même de calculer un nouveau poids de distance, et ainsi de suite jusqu'à convergence vers une masse finale.

**16.** Procédé selon l'une des revendications 1 à 15, **caractérisé en ce qu'**on enregistre les valeurs numériques du procédé dans des moyens mémoire et de traitement du capteur (4) et/ou du dispositif (1) client.

**17.** Procédé selon l'une des revendications 1 à 16, **caractérisé en ce qu'**on augmente le renouvellement des étoiles ayant un poids important en élevant la fréquence des mesures du capteur stellaire (4) et/ou du dispositif (1) client.

**18.** Procédé selon la revendication 1, **caractérisé en ce qu'**on fait intervenir directement dans les masses la dispersion de l'ensemble d'une nouvelle sélection grâce à des moyens de traitement reliés au capteur (4) et/ou au dispositif (1) client.

**19.** Procédé selon la revendication 18, **caractérisé en ce que** pour faire intervenir directement la dispersion dans les masses, on utilise des moyens de traitement reliés au capteur (4) et/ou au dispositif (1) client comportant une structure neuronale.

**20.** Système de poursuite ou d'acquisition d'étoiles comportant un capteur stellaire (4) relié à un dispositif (1) client comportant des moyens d'attribution de coefficients de masses aux mesures d'une succession d'étoiles acquises par le capteur ou son dispositif client afin de déterminer une orientation dans l'espace, **caractérisé en ce qu'**il comporte des moyens aptes à favoriser ou défavoriser le renouvellement dans le temps, par le capteur stellaire (4), des mesures ayant les masses les plus importantes, et des moyens aptes à déplacer dans un spectre fréquentiel une partie de la puissance de l'erreur associée à l'ensemble des mesures stellaires.

**21.** Système selon la revendication 21, **caractérisé en ce qu'**il comporte des moyens reliés au capteur (4) et/ou au dispositif (1) client comportant une structure neuronale.

**Claims**

**1.** A method of assigning weighting coefficients to measurements of a succession of stars acquired by a star sensor (4) connected to a client device (1) in order to determine a spatial orientation, **characterised in that** higher or lower preference is given to refreshment, in time, of the positions of measurements with the highest weights and / or stars on which these measurements are made by the star sensor (4) and / or its client device (1), so as to displace within the frequency spectrum part of the power of the error associated with the set of star measurements.

**2.** A method according to claim 1, **characterised in that** in the calculation of the weights of measurements in a current selection, the reinforcement or attenuation takes place as a result of applying a distance weight associated with each measurement in the current selection and characteristic of an average distance between firstly the said measurement and secondly measurements for previous selections and other measurements in the current selection.

**3.** A method according to claim 2, **characterised in that** the distance weight associated with the current selection measurement is calculated as a weighted average of the corresponding distances between firstly the said measurement, and secondly the measurements for previous selections and other measurements in the current selection.

**4.** A method according to claim 3, **characterised in that** the weighting coefficient associated with the distance between a first measurement in the current selection and a second measurement in a previous selection or another measurement in the current selection includes a memory coefficient associated with the said second measurement, and / or the weight of the second measurement if it belongs to a previous selection or a temporary weight if it belongs to the current selection.

**5.** A method according to either of claims 3 or 4, **characterised in that** the distance calculation combines the angular distance between the two measurements, and an identity distance that depends on the difference in nature of the two stars for which the measurements are being made.

**6.** A method according to either of claims 4 or 5, **characterised in that** the memory coefficient of a measurement $m_i$ at time t is defined using the following formula:

$$Mem\,(m_i/t)\ =\ \mu\times\Pi^{-[t-T(m_i)]},$$

where

- $T(m_k)$ is a validity date of a measurement $m_k$
- $\mu$ and $\Pi$ are constants.

**7.** A method according to any one of claims 2 to 6, **characterised in that** a charge is assigned to each star for which a measurement is made summarising the weights assigned to the measurements made on the said star in the past, attenuated by the passage of time.

**8.** A method according to claim 7, **characterised in that** the charge of the star $e_p$ is defined at an instant T by the following formula:

$$Cha\,(e_p,\,T)\ =\ \sum_{\substack{i=P+1\\E(m_i)=e_p}}^{N}[A(m_i)\,x\,\mathrm{Mem}(m_i/T)]$$

where $Mem(m_i/T)$ is the memory coefficient of the measurement $m_i$ at time T, $E(m_i)$ is the star on which the measurement $m_i$ is made, and $A(m_i)$ is the measurement weight $m_i$.

**9.** A method according to either of claims 7 or 8, **characterised in that** the charge associated with a star to which a measurement in the current selection is related is updated before it is used in the calculation of the weight associated with a measurement, using a coefficient that depends on the difference $\Delta$ between the current date and the last update date for this charge.

**10.** A method according to claim 9, **characterised in that** the coefficient may be a factor and is in the form $\Pi^{-\Delta}$, where $\Pi$ is a constant.

**11.** A method according to claim 9, **characterised in that** the coefficient is additive and is in the forms $_{-\rho x \Delta}$ where $_\rho$ is a constant.

**12.** A method according to any one of claims 7 to 11, **characterised in that** after calculating the weight associated with a measurement in the current selection, the charge associated with the star for which this measurement was made is updated.

**13.** A method according to claim 12, **characterised in that** the update is made by adding the weight associated with the measurement.

**14.** A method according to any one of claims 1 to 13, **characterised in that** a random function is used in the calculation of the weights.

**15.** A method according to any one of claims 1 to 14, **characterised in that** the calculation of the distance weight is iterated with a temporary weight for measurements in the current selection, the distance weight being used to calculate a new weight itself used to calculate a new distance weight and so on, until convergence towards a final weight.

**16.** A method according to any one of claims 1 to 15, **characterised in that** the digital values of the method are saved in memory and processing means of the sensor (4) and / or the client device (1).

**17.** A method according to any one of claims 1 to 16, **characterised in that** the renewal rate of stars with a large weight is increased by increasing the frequency of measurements of the star sensor (4) and /or the client device (1).

**18.** A method according to claim 1, **characterised in that** the dispersion of the complete new selection is used directly in the weights, using processing means related to the sensor (4) and / or client device (1).

**19.** A method according to claim 18, **characterised in that** processing means related to the sensor (4) and / or the client device (1) comprising a neurone structure are used to directly affect dispersion in the weights.

**20.** A star tracking or an acquisition system, comprising a star sensor (4) connected to a client device (1) comprising means of assigning weight coefficients to measurements of a succession of stars acquired by the sensor or its client device in order to determine a spatial orientation, **characterised in that** it comprises means of giving higher or lower preference to refreshment by the star sensor (4) of the positions of measurements with the highest weights, and means of displacing part of the power of the error associated with the set of star measurements within the frequency spectrum.

**21.** A system according to claim 20, **characterised in that** it comprises means connected to the sensor (4) and/or the client device (1) comprising a neurone structure.

**Patentansprüche**

**1.** Verfahren zur Zuweisung von Massenkoeffizienten auf die Messungen einer Folge von Sternen, die von einem Sternsensor (4) erfasst werden, der mit einer Client-Vorrichtung (1) verbunden ist, um eine Ausrichtung im Raum zu bestimmen, **dadurch gekennzeichnet, dass** die Erneuerung der Position der Messungen, welche die größten Massen haben, und/oder der Sterne, auf die sich diese Messungen beziehen, über die Zeit hinweg durch den Sternsensor (4) und/oder seine Client-Vorrichtung (1) bevorzugt oder benachteiligt wird, um im Frequenzspektrum einen Teil der Leistung des zur Gesamtheit der Sternmessungen gehörigen Fehlers zu verschieben.

2. Verfahren gemäß Anspruch 1, **dadurch gekennzeichnet, dass** in die Berechnung der Massen der Messungen einer aktuellen Auswahl die Verstärkung oder die Abschwächung über ein Distanzgewicht einfließt, das zu jeder Messung der aktuellen Auswahl gehört und kennzeichnend für einen mittleren Abstand zwischen der Messung einerseits und den Messungen der vergangenen Auswahlen und den anderen Messungen der aktuellen Auswahl andererseits ist.

3. Verfahren gemäß Anspruch 2, **dadurch gekennzeichnet, dass** das zu einer Messung der aktuellen Auswahl gehörige Abstandsgewicht als ein Gewichtsmittel der jeweiligen Abstände zwischen der Messung einerseits und jeweils den Messungen der vergangenen Auswahlen und den anderen Messungen der aktuellen Auswahl andererseits berechnet wird.

4. Verfahren gemäß Anspruch 3, **dadurch gekennzeichnet, dass** in den Gewichtungskoeffizienten, der zum Abstand zwischen einer ersten Messung der aktuellen Auswahl und einer zweiten Messung einer vergangenen Auswahl oder einer anderen Messung der aktuellen Auswahl gehört, ein zur zweiten Messung gehöriger Speicherkoeffizient und/oder das Gewicht der zweiten Messung, falls sie zu einer vergangenen Auswahl gehört, oder ein vorläufiges Gewicht, falls sie zur aktuellen Auswahl gehört, einfließen.

5. Verfahren gemäß einem der Ansprüche 3 oder 4, **dadurch gekennzeichnet, dass** die Berechnung des Abstands den Winkelabstand zwischen den beiden Messungen und einem Identitätsabstand in Abhängigkeit des Wesenunterschieds der beiden, die den Gegenstand der Messungen bildenden Sterne kombiniert.

6. Verfahren gemäß einem der Ansprüche 4 oder 5, **dadurch gekennzeichnet, dass** der Gedächtniskoeffizient einer Messung $m_i$ zu einem Zeitpunkt $t$ durch die Formel definiert ist:

$$Mem(m_i / t) = \mu x \prod^{-[t - T(m_i)]},$$

wobei

• $T(m_k)$ ein Gültigkeitsdatum einer Messung $m_k$ ist.
• M und $\prod$ Konstanten sind.

7. Verfahren gemäß einem der Ansprüche 2 bis 6, **dadurch gekennzeichnet, dass** für jeden Stern, welcher der Gegenstand einer Messung ist, eine Last verwendet wird, welche die Massen zusammenfasst, die den Messungen zugewiesen sind, die sich in der Vergangenheit auf den Stern bezogen haben, und die durch den Zeitverlauf abgeschwächt sind.

8. Verfahren gemäß Anspruch 7, **dadurch gekennzeichnet, dass** die Last des Sterns $e_p$ zu einem Zeitpunkt T durch die Formel definiert wird:

$$Cha(e_p, T) = \sum_{\substack{i=P+1 \\ E(m_i)=e_p}}^{N} [A(m_i) x Mem(m_i / T)]$$

wobei $Mem(m_i/ T)$ der Speicherkoeffizient der Messung $m_i$ zum Zeitpunkt T, $E(m_i)$ der Stern ist, auf den sich die Messung $m_i$ bezog und $A(m_i)$ die Masse der Messung $m_i$ ist.

9. Verfahren gemäß einem der Ansprüche 7 oder 8, **dadurch gekennzeichnet, dass,** bevor man sie in die Berechnung der zu einer Messung gehörigen Masse einfließen lässt, die Last, die zu einem Stern gehört, auf den sich eine Messung der aktuellen Auswahl bezieht, dank eines Koeffizienten aktualisiert wird, der von der Differenz $\Delta$ zwischen dem aktuellen Datum und dem Datum der letzten Aktualisierung derselben Last abhängt.

**10.** Verfahren gemäß Anspruch 9, **dadurch gekennzeichnet, dass** der Koeffizient multiplikativ ist und in der Form $\Pi^{-\Delta}$ auftritt, wobei $\Pi$ eine Konstante ist.

**11.** Verfahren gemäß Anspruch 9, **dadurch gekennzeichnet, dass** der Koeffizient additiv ist und in der Form $-\rho x \Delta$ auftritt, wobei $\rho$ eine Konstante ist.

**12.** Verfahren gemäß einem der Ansprüche 7 bis 11, **dadurch gekennzeichnet, dass,** nachdem die zu einer Messung der aktuellen Auswahl gehörige Masse berechnet wurde, die Last, die zu dem Stern gehört, der den Gegenstand dieser Messung gebildet hat, auf den neuesten Stand gebracht wird.

**13.** Verfahren gemäß Anspruch 12, **dadurch gekennzeichnet, dass** das Bringen auf den neuesten Stand durchgeführt wird, indem man die zur Messung gehörige Masse addiert.

**14.** Verfahren gemäß einem der Ansprüche 1 bis 13, **dadurch gekennzeichnet, dass** man eine Zufallsfunktion in die Berechnung der Massen einfließen lässt.

**15.** Verfahren gemäß einem der Ansprüche 1 bis 14, **dadurch gekennzeichnet, dass** eine Iteration der Berechnung des Abstandsgewichts mit einer vorläufigen Masse für die Messungen der aktuellen Auswahl durchgeführt wird, wobei das Abstandsgewicht erlaubt, eine neue Masse zu berechnen, die selbst erlaubt, ein neues Abstandsgewicht zu berechnen, und so weiter bis zur Konvergenz zu einer endgültigen Masse.

**16.** Verfahren gemäß einem der Ansprüche 1 bis 15, **dadurch gekennzeichnet, dass** man die numerischen Werte des Verfahrens in Speicher- und Verarbeitungsmitteln des Sensors (4) und/oder der Client-Vorrichtung (1) gespeichert werden.

**17.** Verfahren gemäß einem der Ansprüche 1 bis 16, **dadurch gekennzeichnet, dass** die Erneuerung der Sterne, die ein großes Gewicht haben, heraufgesetzt wird, indem die Häufigkeit der Messungen des Sternsensors (4) und/oder der Client-Vorrichtung (1) erhöht wird.

**18.** Verfahren gemäß Anspruch 1, **dadurch gekennzeichnet, dass** man direkt in die Massen die Dispersion der Gesamtheit einer neuen Auswahl dank Verarbeitungsmittel einfließen lässt, die mit dem Sensor (4) und/oder der Client-Vorrichtung (1) verbunden sind.

**19.** Verfahren gemäß Anspruch 18, **dadurch gekennzeichnet, dass,** um die Dispersion in die Massen einfließen zu lassen, Verarbeitungsmittel verwendet werden, die mit dem Sensor (4) und/oder der eine neuronale Struktur aufweisenden Client-Vorrichtung (1) verbunden sind.

**20.** System zum Verfolgen oder Erfassen von Sternen, das einen Sternsensor (4) umfasst, der mit einer Client-Vorrichtung (1) verbunden ist, die Mittel zum Zuweisen von Massenkoeffizienten auf die Messungen einer Folge von vom Sensor oder seiner Client-Vorrichtung erfassten Sternen umfasst, um eine Ausrichtung im Raum zu bestimmen, **dadurch gekennzeichnet, dass** es Mittel umfasst, die ausgelegt sind, die Erneuerung der Messungen, welche die größten Massen haben, durch den Sternsensor (4) über die Zeit hinweg zu bevorzugen oder zu benachteiligen, sowie Mittel, die ausgelegt sind, um in einem Frequenzspektrum einen Teil der Leistung des zur Gesamtheit der Sternmessungen gehörigen Fehlers zu verschieben.

**21.** System gemäß Anspruch 21, **dadurch gekennzeichnet, dass** es Mittel umfasst, die mit dem Sensor (4) und/oder der eine neuronale Struktur aufweisenden Client-Vorrichtung (1) verbunden sind.

FIG_1

FIG_2

FIG.3

FIG.4

**EP 1 606 644 B1**

**RÉFÉRENCES CITÉES DANS LA DESCRIPTION**

**Documents brevets cités dans la description**

- US 6362464 B
- US 6330988 B
- US 6272432 B